# EUROPÄISCHE PATENTSCHRIFT

(11) **EP 3 898 162 B1**
(45) Veröffentlichungstag und Bekanntmachung des Hinweises auf die Patenterteilung: **13.09.2023**
(21) Anmeldenummer: 19809019.3
(22) Anmeldetag: 19.11.2019
(51) Int. Cl.: B29C 33/38, F03D 1/06, B29D 99/00, B29C 70/30, B29C 33/02, B29B 7/92, B29B 7/90, B29B 7/74, B29C 37/00, B29C 41/36, B29C 41/08, B29L 31/08

(54) **ROTORBLATTFORM ZUR HERSTELLUNG EINES ROTORBLATTS UND VERFAHREN**
ROTOR BLADE MOULD FOR PRODUCING A ROTOR BLADE, AND METHOD
MOULE DE PALE DE ROTOR POUR LA PRODUCTION D'UNE PALE DE ROTOR ET PROCÉDÉ

(30) Priorität: 21.12.2018 DE 102018133508
(43) Veröffentlichungstag der Anmeldung: 27.10.2021
(73) Patentinhaber: Wobben Properties GmbH, 26607 Aurich (DE)
(72) Erfinder: SCHREIBER, Joachim, 21357 Bardowick (DE)
(74) Vertreter: Eisenführ Speiser
(86) Internationale Anmeldenummer: PCT/EP2019/081802
(87) Internationale Veröffentlichungsnummer: WO 2020/126261

(56) Entgegenhaltungen:
- EP-A1- 2 657 280
- EP-A2- 0 340 707
- WO-A1-94/20274
- WO-A1-98/32709
- WO-A1-2009/007077
- WO-A1-2015/027423
- WO-A2-2008/067809
- CN-A- 102 848 493
- CN-A- 103 819 139
- CN-A- 108 781 922
- DE-A1- 19 533 564
- DE-A1-102010 013 405
- DE-A1-102015 215 055
- US-A1- 2009 191 345

## Beschreibung

Die Erfindung betrifft eine Rotorblattform zur Herstellung eines Rotorblatts sowie Verfahren zur Herstellung einer Rotorblattform, die Verwendung einer Rotorblattform, eine Sprühvorrichtung zur Herstellung einer Isolationsschicht und ein Klebstoffprodukt.

Windenergieanlagen sind grundsätzlich bekannt. Moderne Windenergieanlagen betreffen in der Regel sogenannte Horizontalachsen-Windenergieanlagen, bei denen die Rotorachse im Wesentlichen horizontal angeordnet ist und die Rotorblätter eine im Wesentlichen senkrechte Rotorfläche überstreichen. Windenergieanlagen umfassen neben einem an einer Gondel angeordneten Rotor in der Regel einen Turm, auf dem die Gondel mit dem Rotor um eine im Wesentlichen vertikal ausgerichtete Achse drehbar angeordnet ist. Der Rotor umfasst in der Regel ein, zwei oder mehrere Rotorblätter. Die Rotorblätter sind schlanke Bauteile, die häufig aus Kunststoff, insbesondere Faserverbundkunststoff, hergestellt sind, bzw. diesen umfassen.

Rotorblätter moderner Windenergieanlagen erreichen Größen von über 50 Metern Länge, fünf Metern Breite und zwei Metern Dicke und können gegebenenfalls noch deutlich größere Abmessungen aufweisen. Um eine hohe Stabilität bei geringem Gewicht zu erreichen, wird ein Rotorblatt häufig aus faserverstärktem Kunststoff, insbesondere glasfaserverstärktem Kunststoff, hergestellt. Dies beinhaltet, dass Komponenten aus anderen Materialien von dem Rotorblatt umfasst sein können, wie beispielsweise eine Hinterkante aus Metall oder Verstärkungsmaterialien in dem Rotorblatt aus Holz. Der überwiegende Teil des Rotorblatts, insbesondere die formgebende Schale oder Teilschale wird jedoch in der Regel aus faserverstärktem Kunststoff hergestellt. Hierzu wird wenigstens eine Rotorblattform verwendet, die im Grunde eine Negativform der herzustellenden Rotorblattoberfläche bildet. Das Rotorblatt kann beispielsweise aus zwei Halbschalen zusammengesetzt werden, wobei die Halbschalen jeweils zuvor in einer eigenen Rotorblattform hergestellt werden. Je nach Größe des herzustellenden Rotorblattes können auch mehr als zwei Formen vorgesehen sein.

Zum Herstellen des Rotorblattes bzw. Rotorblattabschnittes werden beispielsweise in Harz getränkte Fasergewirke, insbesondere Gewebe, in die Form eingelegt, um dann auszuhärten und eine Oberfläche gemäß der Rotorblattform anzunehmen. Zum Beschleunigen und/oder gleichmäßigem Aushärten des Kunststoffes wird die Rotorblattform häufig beheizt. Hierbei soll eine gleichmäßige oder gegebenenfalls bei Bedarf örtlich fokussierte Erwärmung zum Aushärten vorgenommen werden.

Bei der Herstellung von Rotorblattformen werden häufig umweltbelastende Materialien verwendet, die beispielsweise eine Emission von Kohlenstoffdioxid bewirken. Ferner können die zu verarbeitenden Materialien umfangreiche Arbeitsschutzmaßnahmen erfordern, um die Arbeitssicherheit zu gewährleisten. Ein häufig verwendeten Material ist beispielsweise Polyurethan (PUR). Polyurethan, insbesondere die Isocyanat-Komponente, steht im Verdacht, krebserregend zu sein. Ferner wird bei der Verwendung von Polyurethan-Spritzschaum Kohlenstoffdioxid emittiert.

Das Deutsche Patent- und Markenamt hat in der Prioritätsanmeldung zu vorliegender Anmeldung folgenden Stand der Technik recherchiert: DE 103 58 801 A1, DE 195 33 564 A1, DE 10 2010 013 405 A1, DE 10 2014 113 069 A1, DE 10 2015 215 055 A1, US 2018/0 319 046 A1, EP 2 565 223 A1, EP 2 657 280 A1, WO 2009/ 007 077 A1.

EP 0 340 707 A2 offenbart Dämmstoffe der Dichte 0,1 bis 0,4 g/cm3 mit gutem Wärmedämmvermögen und ausreichend hoher Druckfestigkeit, die durch Verkleben von Silica-Aerogel-Partikeln und einem anorganischen oder organischen Bindemittel erhalten werden.

Es ist daher eine Aufgabe der vorliegenden Erfindung, eine Rotorblattform zur Herstellung eines Rotorblatts sowie Verfahren zur Herstellung einer Rotorblattform, die Verwendung einer Rotorblattform, eine Vorrichtung zur Herstellung einer Isolationsschicht und ein Klebstoffprodukt bereitzustellen, die einen oder mehrere der genannten Nachteile vermindern oder beseitigen. Insbesondere ist es eine Aufgabe der Erfindung, eine Lösung bereitzustellen, die eine Herstellung von Rotorblättern mit einer hohen Arbeitssicherheit gewährleistet. Darüber hinaus ist es eine Aufgabe der Erfindung, eine Lösung bereitzustellen, die möglichst umweltfreundlich ist.

Diese Aufgabe wird gelöst durch eine Rotorblattform gemäß Anspruch 1.

Die Kavität des Formeinsatzes ist insbesondere der Raum, in dem im späteren Einsatz der Rotorblattform das Rotorblatt geformt wird. Insbesondere werden in der Kavität die Fasern und die Matrix des herzustellenden Rotorblattes verlegt. Die Kavität wird zumindest teilweise durch die Formseite ausgebildet. Die Formseite kann ein Negativ des herzustellenden Rotorblattes sein oder umfassen.

Die Strukturseite ist der Formseite abgewandt angeordnet. Die Strukturseite kann insbesondere dafür genutzt werden, dass an dieser eine Tragstruktur zur Handhabung, beispielsweise für den Rotorblattherstellungsprozess, angeordnet werden kann. Der Formeinsatz kann neben der Formseite und der Strukturseite auch weitere Seiten aufweisen, beispielsweise Seitenwände. Darüber hinaus kann der Formeinsatz auch Übergangsseiten aufweisen, die zwischen der Formseite und der Strukturseite angeordnet sind. Die Übergangsseiten können beispielsweise zwischen Kanten der Formseite und der Strukturseite angeordnet sein. Die Formseite ist vorzugsweise konkav ausgebildet. Ferner vorzugsweise ist diese abschnittsweise konkav ausgebildet. Die Strukturseite ist vorzugsweise konvex ausgebildet. Ferner vorzugsweise ist diese abschnittsweise konvex ausgebildet.

An der Strukturseite ist die Isolationsschicht angeordnet. Die Isolationsschicht erstreckt sich vorzugsweise über einen Großteil der Strukturseite. Ferner vorzugsweise kann die Isolationsschicht auch an einem, zwei oder mehreren Isolationsbereichen der Strukturseite angeordnet sein. Die Isolationsschicht kann ferner zwei oder mehrere Isolationsschichtabschnitte aufweisen, die auch voneinander beabstandet sein können.

Die Isolationsschicht umfasst Klebstoff und die Vielzahl an Schüttelementen aus einem Dämmmaterial. Insbesondere kann der Klebstoff ein Sprühklebstoff sein. Unter einem Sprühklebstoff ist insbesondere ein Klebstoff zu verstehen, der sprühbar ist, vorzugsweise mittels geeigneter Sprühvorrichtungen. Ein sprühbarer Klebstoff kann beispielsweise ein Schmelzklebstoff sein. Sprühklebstoffe sind beispielsweise lösungsmittelfreie und bei Raumtemperatur im Wesentlichen feste Stoffe, die mittels Wärme aufgeschmolzen werden können und nach Abkühlung eine feste Phase eingehen. Ein Schmelzklebstoff ist insbesondere ein Klebstoff, der bei Raumtemperatur fest ist und sich bei Erwärmung verflüssigt.

Ferner umfasst die Isolationsschicht die Vielzahl an Schüttelementen aus einem Dämmmaterial. Die Vielzahl an Schüttelementen bildet vorzugsweise ein Schüttgut, welches insbesondere als ein körniges oder stückiges Gemenge zu verstehen ist. Die Vielzahl an Schüttelementen kann beispielsweise mittels ihrer Korngröße, ihrer Kornverteilung oder auch ihrer Schüttdichte beschrieben werden. Die Vielzahl an Schüttelementen bildet insbesondere ein rieselfähiges Material aus. Ferner kann die Vielzahl an Schüttelementen als Granulat vorliegen. Die Schüttelemente haften vorzugsweise mittels des Klebstoffs aneinander. Darüber hinaus haften die Schüttelemente vorzugsweise mittels des Klebstoffs an der Strukturseite. Die Vielzahl an Schüttelementen besteht im Wesentlichen aus einem Dämmmaterial. Das Dämmmaterial kann insbesondere eine Eigenschaft zur Wärme- und/oder Schalldämmung aufweisen.

Die Isolationsschicht kann neben dem Klebstoff und der Vielzahl an Schüttelementen aus einem Dämmmaterial noch weitere Komponenten umfassen. Beispielsweise kann die Isolationsschicht auch weitere Schüttelemente aus einem Material umfassen, welches kein Dämmmaterial ist. Darüber hinaus kann die Isolationsschicht chemische Komponenten umfassen, die die Isolationseigenschaften und/oder die Hafteigenschaften verbessern. Darüber hinaus kann es bevorzugt sein, dass die Isolationsschicht im Wesentlichen aus dem Klebstoff und der Vielzahl an Schüttelementen aus einem Dämmmaterial besteht. Vorzugsweise beträgt der Volumenanteil und/oder der Massenanteil des Klebstoffs in der Isolationsschicht weniger als 30 %. Insbesondere ist es bevorzugt, dass der Volumenanteil und/oder der Massenanteil des Klebstoffs in der Isolationsschicht zwischen 5 % und 10 % beträgt.

Der im Vorherigen beschriebenen Rotorblattform liegt unter anderem die Erkenntnis zugrunde, dass die derzeitig verwendeten Materialien gesundheitsgefährdend und umweltbelastend sein können. Ferner liegt der Erfindung die Erkenntnis zugrunde, dass Schüttelemente aus Dämmmaterial grundsätzlich eine gute Isolierung ermöglichen. Ferner wurde erkannt, dass Schüttelemente aus Dämmmaterial im Wesentlichen nicht an Flächen haften. Schüttelemente aus Dämmmaterial werden beispielsweise in einen Hohlraum zwischen Außenwand und Innenwand eines Gebäudes eingeblasen, um die Isolierung des Gebäudes zu verbessern. Der Hohlraum zwischen Außenwand und Innenwand wird in der Regel vollständig ausgefüllt. Ein Haften der Schüttelemente aneinander und an den Wänden des Hohlraums ist zwingend zu vermeiden, da dies das Einblasen der Schüttelemente in den Hohlraum verhindern würde. Der Erfindung liegt ferner die Erkenntnis zugrunde, dass die dämmende Wirkung der nicht haftenden Schüttelemente dennoch an Rotorblattformen genutzt werden kann, wenn eine Haftung der Schüttelemente an der Rotorblattform ermöglicht wird. Überraschenderweise hat sich gezeigt, dass in Kombination mit einem Klebstoff eine Isolationsschicht entsteht, die einerseits haftet und andererseits eine für eine Rotorblattform ausreichende Isolierung bereitstellt. Der Klebstoff reduziert die Isolationseigenschaften der Isolationsschicht somit im Gegensatz zu anderen Haftmaterialien nicht oder zumindest nicht signifikant.

Die im Vorherigen beschriebene Rotorblattform ermöglicht einen umfangreichen Einsatz nachhaltiger Materialien, wie beispielsweise Cellulose als Dämmmaterial oder Kautschuk als Klebstoff. Die Rotorblattform ist somit bei der Herstellung umweltfreundlicher und zeichnet sich durch die Möglichkeit einer verbesserten Arbeitssicherheit aus. Während des Einsatzes einer solchen Rotorblattform kann eine verbesserte Langlebigkeit festgestellt werden. Darüber hinaus ist die Entsorgung der Rotorblattform durch den ermöglichten Einsatz nachhaltiger Materialien verbessert. Die Rotorblattform zeichnet sich ferner durch die Möglichkeit einer Polyurethan-freien Isolationsschicht aus. Die Herstellung dieser Rotorblattform verbessert durch die Möglichkeit der Vermeidung der krebserregenden Substanz die Arbeitssicherheit. Darüber hinaus ist die Freisetzung von Kohlenstoffdioxid reduziert, da dieses bei dem Schäumen von Polyurethan freigesetzt wird.

Die Rotorblattform weist vorzugsweise eine Länge, eine Breite und eine Höhe auf. In einer bevorzugten Ausführungsvariante der Rotorblattform ist vorgesehen, dass die Isolationsschicht die Strukturseite in Richtung der Länge und/oder in Richtung der Breite und/oder in Richtung der Höhe zu mehr als 20 %, mehr als 30 %, mehr als 40 %, mehr als 50 %, mehr als 60 %, mehr als 70 %, mehr als 80 %, mehr als 90 % oder mehr als 95 % bedeckt. Ferner ist es bevorzugt, dass sich die Isolationsschicht in Richtung der Länge der Rotorblattform mehr als 10 m, mehr als 15 m, mehr als 20 m oder mehr als 30 m, erstreckt.

Die Isolationsschicht weist vorzugsweise eine Dicke auf. Die Dicke der Isolationsschicht kann entlang der Strukturseite variieren. Beispielsweise kann die Dicke in einem mittigen Abschnitt der Strukturseite eine größere Abmessung aufweisen als in einem seitlichen Abschnitt. Die Dicke der Isolationsschicht kann sich beispielsweise in orthogonaler Richtung zur Strukturseite erstrecken. Vorzugsweise beträgt die Dicke mehr als 3 cm, mehr als 4 cm, mehr als 5 cm oder mehr als 10 cm. Ferner vorzugsweise beträgt die Dicke der Isolationsschicht weniger als 10 cm, weniger als 5 cm oder weniger als 4 cm. Insbesondere ist es bevorzugt, dass die Dicke der Isolationsschicht zwischen 3 cm und 5 cm beträgt.

Der vorzugsweise als Feststoff bereitgestellte Klebstoff kann beispielsweise mit einem Fassschmelzer aufgeschmolzen werden und im flüssigen Zustand mit einer Spritzpistole aufgetragen werden, wobei beim Austritt des Klebstoffs aus der Spritzpistole eine Erstarrung des Klebstoffs zu einer klebrigen Masse erfolgt und somit eine Komponente der Isolationsschicht bereitgestellt werden kann. Der Klebstoff kann beispielsweise mit einer Temperatur von 100 °C bis 300 °C, insbesondere von 100 °C bis 200° C, versprüht werden. Das Dämmmaterial weist vorzugsweise eine geringe Wärmeleitfähigkeit auf. Das Dämmmaterial kann beispielsweise eine Wärmeleitfähigkeit von kleiner 0,05 W / (m*K) aufweisen. Dabei steht W für Watt, m für Meter und K für Kelvin. Ferner ist es bevorzugt, dass die Wärmeleitfähigkeit des Dämmmaterials zwischen 0,01 W / (m*K) und 0,02 W / (m*K) beträgt. Ferner ist es bevorzugt, dass das Dämmmaterial ein nicht brennbares oder schwer entflammbares Dämmmaterial ist.

In einer bevorzugten Ausführungsvariante der Rotorblattform ist vorgesehen, dass das Dämmmaterial ein mineralisches Material und/oder ein organisches Material und/oder ein synthetisches Material umfasst, oder das Dämmmaterial ein mineralisches Material und/oder ein organisches Material und/oder ein synthetisches Material ist.

Ein mineralisches Material ist insbesondere ein anorganisches Material. Insbesondere ist ein mineralisches Material ein nichtmetallisches Material. Ein organisches Material kann insbesondere ein auf Kohlenstoff basierendes Material sein. Ein synthetisches Material ist insbesondere ein auf Basis chemischer Synthese erhaltenes Material.

In einer weiteren bevorzugten Fortbildung der Rotorblattform ist vorgesehen, dass das Dämmmaterial ausgewählt ist aus der Gruppe bestehend aus: Cellulose, Holzfasern, Mineralwolle und Polystyrol. Insbesondere ist es bevorzugt, dass das Dämmmaterial Isocyanat-frei und/oder Polyurethan-frei und/oder frei von Isocyanat enthaltendem Polyurethan ausgebildet ist.

Die genannten Dämmmaterialien zeichnen sich durch eine geringe Wärmeleitfähigkeit aus. Darüber hinaus sind diese Dämmmaterialien als Schüttelemente erhältlich. Darüber hinaus lassen sich diese Dämmmaterialien gut mit einem Klebstoff mischen. Außerdem können diese genannten Dämmmaterialien gut auf eine Klebstoffschicht aufgeblasen werden, wie es im Folgenden noch näher erläutert wird.

In einer weiteren bevorzugten Ausführungsvariante der Rotorblattform ist vorgesehen, dass der Klebstoff eine Isocyanat-freie Klebstoffbasis aufweist und/oder eine Polyurethan-freie Klebstoffbasis aufweist und/oder eine Klebstoffbasis aufweist, die frei von Isocyanat enthaltendem Polyurethan ist.

Eine Isocyanat-freie Klebstoffbasis zeichnet sich insbesondere dadurch aus, dass diese keinen oder einen geringen Anteil an Isocyanat aufweist. Insbesondere kann Isocyanat - frei hinsichtlich des Klebstoffs und/oder des Dämmmaterials bedeuten, dass die Klebstoffbasis weniger als 10 Gew.-%, weniger als 2 Gew.-%, weniger als 1 Gew.-%, weniger als 0,1 Gew.-% weniger als 0,01 Gew.-% oder weniger als 0,001 Gew.-% Isocyanat aufweist. Besonders bevorzugt ist es dabei, wenn die Klebstoffbasis weniger als 0,01 Gew.% oder weniger als 0,001 Gew.-% Isocyanat aufweist, da dann eine besonders hohe Arbeitssicherheit gewährleistet werden kann. Darüber hinaus ist es bevorzugt, dass der Klebstoff kein Isocyanat aufweist.

Eine Polyurethan-freie Klebstoffbasis zeichnet sich insbesondere dadurch aus, dass diese keinen oder einen geringen Anteil an Polyurethan aufweist. Insbesondere kann Polyurethan-frei hinsichtlich des Klebstoffs und/oder des Dämmmaterials bedeuten, dass die Klebstoffbasis weniger als 10 Gew.-%, weniger als 2 Gew.-%, weniger als 1 Gew.-%, weniger als 0,1 Gew.-%, weniger als 0,01 Gew.-% oder weniger als 0,001 Gew.-% Polyurethan aufweist.. Besonders bevorzugt ist es dabei, wenn die Klebstoffbasis weniger als 0,01 Gew.% oder weniger als 0,001 Gew.-% Polyurethan aufweist, da dann eine besonders hohe Arbeitssicherheit gewährleistet werden kann. Darüber hinaus ist es bevorzugt, dass der Klebstoff kein Polyurethan aufweist.

Polyurethan, das frei von Isocyanat ist bzw. kein Isocyanat enthält, kann auch als Isocyanat-freies Polyurethan bezeichnet werden. Ein Isocyanat-freies Polyurethan zeichnet sich insbesondere dadurch aus, dass dieses keinen oder einen geringen Anteil an Isocyanat aufweist. Insbesondere kann Isocyanat-frei hinsichtlich des Klebstoffs und/oder des Dämmmaterials bedeuten, dass die Klebstoffbasis weniger als 10 Gew.-%, weniger als 2 Gew.-%, weniger als 1 Gew.-%, weniger als 0,1 Gew.-%, weniger als 0,01 Gew.-% oder weniger als 0,001 Gew.-% Isocyanat aufweist. Besonders bevorzugt ist es dabei, wenn die Klebstoffbasis weniger als 0,01 Gew.% oder weniger als 0,001 Gew.-% Isocyanat aufweist, da dann eine besonders hohe Arbeitssicherheit gewährleistet werden kann.. Darüber hinaus ist es bevorzugt, dass der Klebstoff kein Isocyanat aufweist.

Isocyanat enthaltendes Polyurethan hingegen zeichnet sich insbesondere dadurch aus, dass dieses einen Anteil von mindestens 10 Gew.-% Isocyanat aufweist. Vorzugsweise zeichnet sich Isocyanat enthaltendes Polyurethan hingegen durch aus, dass dieses einen höheren Anteil von Isocyanat aufweist als das oben definierte Isocyanat-freie Polyurethan.

Darüber hinaus ist es bevorzugt, dass die Klebstoffbasis des Klebstoffs ausgewählt ist aus der Gruppe bestehend aus: Polyamid, Polyolefin, thermoplastischer Kautschuk, Ethylen-Vinyl-Acetat, Polyester, Epoxidharz, Polyurethan, Zweikomponenten-Epoxidharz, Isocyanat-freiem Polyurethan, Isocyanat-freier Klebstoffbasis, und Polyurethan-freie Klebstoffbasis.

In einer weiteren bevorzugten Ausführungsvariante der Rotorblattform ist vorgesehen, dass diese eine Heizvorrichtung umfasst, wobei vorzugsweise die Heizvorrichtung die Formseite temperiert. Die Temperierung der Formseite durch die Heizvorrichtung kann auf unterschiedliche Weise erfolgen. Beispielsweise kann die Heizvorrichtung teilweise innerhalb des Formeinsatzes angeordnet sein. Beispielsweise können durch den Formeinsatz elektrische Leitungen oder Wasserleitungen verlaufen. Darüber hinaus kann die Heizvorrichtung auch an der Strukturseite angeordnet sein, wobei die von der Heizvorrichtung erzeugte Wärme hin zur Formseite gelangt.

Ferner ist es bevorzugt, dass die Heizvorrichtung eine elektrische Beheizung bereitstellt, und/oder eine wasserbasierte Beheizung bereitstellt. Erfindungsgemäß ist vorgesehen, dass der Formeinsatz einen Kunststoff, insbesondere einen Faserverbundkunststoff, umfasst oder daraus besteht. Die Fasern des Faserverbundkunststoffs können beispielsweise Glasfasern und/oder Kohlenstofffasern sein. Das Matrixmaterial des Faserverbundkunststoffs kann beispielsweise ein Thermoplast oder ein Duroplast sein.

In einer weiteren bevorzugten Fortbildung der Rotorblattform ist vorgesehen, dass diese eine Tragstruktur umfasst, wobei die Tragstruktur zumindest teilweise an der Strukturseite des Formeinsatzes angeordnet ist, und vorzugsweise die Tragstruktur als Gitterstruktur ausgebildet ist.

Gemäß einem weiteren Aspekt wird die eingangs genannte Aufgabe gelöst durch ein Verfahren zur Herstellung einer Rotorblattform gemäß Anspruch 9.

Das Herstellen der Dämmungsklebstoffmischung kann beispielsweise in einer Mischkammer einer im Folgenden nach näher erläuterten Vorrichtung erfolgen. Von dieser Mischungskammer aus kann die Dämmungsklebstoffmischung an der Strukturseite angeordnet insbesondere gesprüht werden. Dies kann beispielsweise mittels Druckluft oder über mechanischen Druck erfolgen. Das Herstellen der Dämmungsklebstoffmischung kann darüber hinaus durch die Vereinigung eines Klebstoffstrahls und eines Schüttelementstrahls erfolgen. Hierfür kann beispielsweise eine Vorrichtung eine Dämmmaterialdüse und eine Klebstoffdüse aufweisen, wobei diese Düsen derart ausgerichtet sind, dass sich die aus der Dämmmaterialdüse austretenden Schüttelemente und der aus der Klebstoffdüse austretende Klebstoff in einem Mischbereich vermischen. Der Mischbereich ist vorzugsweise von der Klebstoffdüse und/oder von der Dämmmaterialdüse beabstandet. In dem Mischbereich treffen der Klebstoffstrahl und der Schüttelementstrahl vorzugsweise aufeinander und bilden einen Dämmungsklebstoffstrahl aus. Der Dämmungsklebstoffstrahl ist vorzugsweise derart ausgerichtet, dass dieser auf die Strukturseite trifft.

Gemäß einem weiteren Aspekt wird die eingangs genannte Aufgabe gelöst durch ein Verfahren zur Herstellung einer Rotorblattform gemäß Anspruch 10.

Eine Isolationslage kann eine Isolationsschicht ausbilden. Insbesondere ist es bevorzugt, dass zwei oder mehrere Isolationslagen eine Isolationsschicht ausbilden. Die Herstellung der Isolationsschicht aus Klebstoff und der Vielzahl an Schüttelementen kann auch abschnittsweise erfolgen. Die abschnittsweise Herstellung der Isolationsschicht kann beispielsweise das Auftragen eines Klebstoffs in einem ersten Isolationsabschnitt der Strukturseite umfassen und das darauffolgende Anordnen, insbesondere Aufblasen, von Schüttelementen an diesem ersten Isolationsabschnitt. Im Anschluss kann dann das gleiche Verfahren in einem zweiten Isolationsabschnitt erfolgen. Darüber hinaus ist es bevorzugt, dass neben der ersten Isolationslage und der zweiten Isolationslage eine dritte, oder eine Mehrzahl an weiteren Isolationslagen über der ersten Isolationslage und der zweiten Isolationslage angeordnet werden. insbesondere ist es bevorzugt, dass die Isolationsschicht eine Dicke von 3 bis 5 cm aufweist.

Gemäß einem weiteren Aspekt wird die eingangs genannte Aufgabe gelöst durch ein Verfahren zur Herstellung eines Rotorblatts oder eines Teils eines Rotorblatts gemäß Anspruch 11.

Das Formen des Rotorblattmaterials mit der Rotorblattform zu einem Rotorblatt oder eines Teils eines Rotorblatts umfasst insbesondere das Verlegen von Fasern und dem anschließenden Infundieren dieser Fasern mit einem Matrixmaterial.

Ferner kann das im Vorherigen genannte Verfahren den Schritt umfassen Anordnen des Rotorblatts und/oder des Teils des Rotorblatts an einem oder mehreren Rotorblattkomponenten zur Herstellung eines Fertigrotorblatts.

Gemäß einem weiteren Aspekt wird die eingangs genannte Aufgabe gelöst durch eine Verwendung einer Rotorblattform gemäß Anspruch 13.

Beschrieben wird ferner eine Vorrichtung zur Herstellung einer Isolationsschicht, umfassend eine Dämmmaterialdüse und eine Klebstoffdüse, wobei die Dämmmaterialdüse eine Dämmmaterial-Austrittsrichtung und die Klebstoffdüse eine Klebstoff-Austrittsrichtung aufweisen, die Dämmmaterial-Austrittsrichtung und die Klebstoff-Austrittsrichtung sich in einem von der Dämmmaterialdüse und/oder der Klebstoffdüse entfernten Mischbereich schneiden, die Dämmmaterialdüse und die Klebstoffdüse derart ausgebildet sind, dass sich ein aus der Dämmmaterialdüse austretendes Dämmmaterial und ein aus der Klebstoffdüse austretender Klebstoff, insbesondere Sprühklebstoff und/oder Schmelzklebstoff, in dem Mischbereich zu einer Dämmungsklebstoffmischung vermischen. Nach Vermischen des Klebstoffs mit der Vielzahl an Schüttelementen weist die Dämmungsklebstoffmischung vorzugsweise eine definierte Auftragsrichtung auf.

Beschrieben wird ferner ein Klebstoffprodukt zur Weiterverarbeitung zu einer Dämmungsklebstoffmischung, insbesondere für eine Rotorblattform zur Herstellung eines Rotorblatts, insbesondere einer Windenergieanlage, umfassend einen bei Raumtemperatur als Feststoff vorliegender Klebstoff, insbesondere Sprühklebstoff und/oder Schmelzklebstoff, eine Vielzahl an Schüttelementen aus einem Dämmmaterial, wobei die Schüttelemente in dem Klebstoff verteilt vorliegen insbesondere im Wesentlichen homogen verteilt vorliegen.

Die im Vorherigen beschriebenen Verfahren und ihre möglichen Fortbildungen weisen Merkmale bzw. Verfahrensschritte auf, die sie insbesondere dafür geeignet machen, für eine hier beschriebene Rotorblattform und ihre Fortbildungen verwendet zu werden. Für weitere Vorteile, Ausführungsvarianten und Ausführungsdetails dieser weiteren Aspekte und ihrer möglichen Fortbildungen wird auch auf die zuvor erfolgte Beschreibung zu den entsprechenden Merkmalen und Fortbildungen der Rotorblattform verwiesen.

Bevorzugte Ausführungsbeispiele werden exemplarisch anhand der beiliegenden Figuren erläutert. Es zeigen:
- Fig. 1:: eine schematische Darstellung einer Windenergieanlage;
- Fig. 2:: eine schematische, dreidimensionale Ansicht von Rotorblattformen;
- Fig. 3:: eine Detailansicht einer Rotorblattform;
- Fig. 4:: eine weitere Detailansicht einer Rotorblattform;
- Fig. 5:: eine schematische, zweidimensionale Querschnittsansicht durch eine Ausführungsvariante einer Rotorblattform;
- Fig. 6:: eine schematische, zweidimensionale Querschnittsansicht durch eine weitere Ausführungsvariante einer Rotorblattform;
- Fig. 7:: eine schematische Anordnung zur Herstellung einer Isolationsschicht;
- Fig. 8:: eine schematische, dreidimensionale Ansicht einer Sprühvorrichtung;
- Fig. 9:: ein schematisches Verfahren zur Herstellung einer Rotorblattform mit vier Schritten;
- Fig. 10:: ein schematisches Verfahren zur Herstellung einer Rotorblattform mit fünf Schritten.

In den Figuren sind gleiche oder im Wesentlichen funktionsgleiche bzw. -ähnliche Elemente mit den gleichen Bezugszeichen bezeichnet.

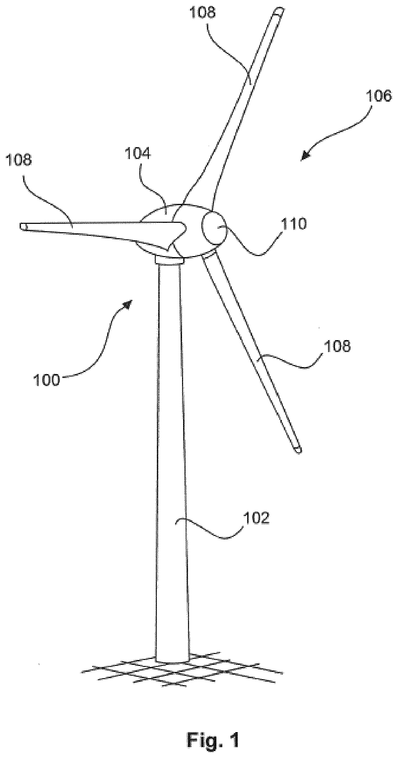

Fig. 1 zeigte eine schematische Darstellung einer Windenergieanlage 100. Fig. 1 zeigt eine Windenergieanlage 100 mit einem Turm 102 und einer Gondel 104. An der Gondel 104 ist ein Rotor 106 mit drei Rotorblättern 108 und eine Spinner 110 angeordnet. Der Rotor 106 wird im Betrieb durch den Wind in eine Drehbewegung versetzt und treibt dadurch einen Generator in der Gondel 104 an. Die Rotorblätter 108 oder Teile der Rotorblätter 108 können mit einer im Folgenden beschriebenen und im Vorherigen beschriebenen Rotorblattform hergestellt sein.

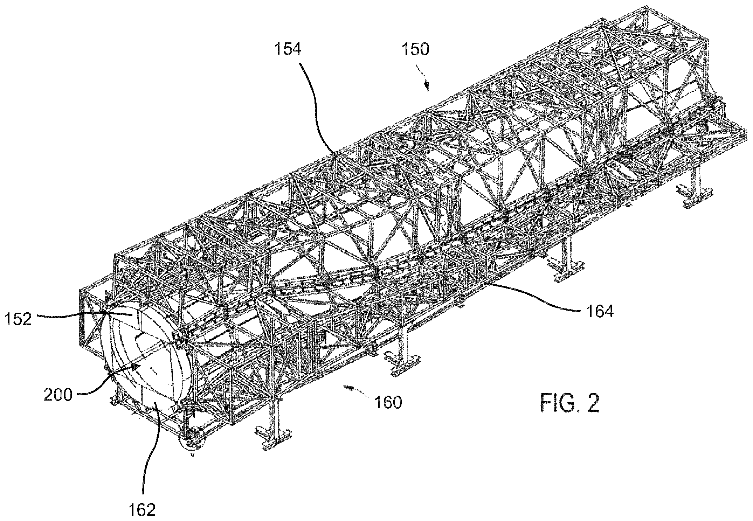

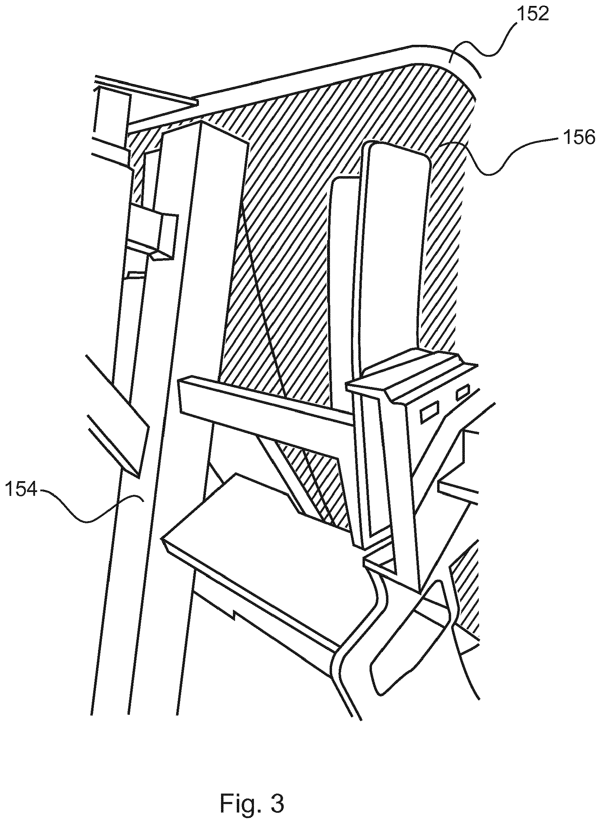

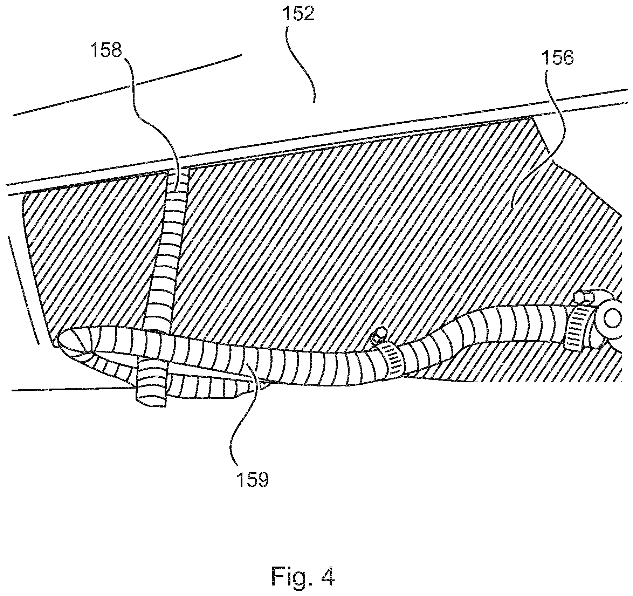

Fig. 2 zeigt eine schematische, dreidimensionale Ansicht von Rotorblattformen 150, 160. Die in Fig. 2 gezeigte Vorrichtung umfasst eine erste Rotorblattform 150 und eine zweite Rotorblattform 160. Die erste Rotorblattform 150 weist einen ersten Formeinsatz 152 und eine erste Tragstruktur 154 auf. Der erste Formeinsatz 152 ist darüber hinaus mit einer nicht gezeigten Heizvorrichtung versehen, die einen Hohlraum zwischen der ersten und zweiten Rotorblattform 150, 160 erwärmen kann. Die zweite Rotorblattform 160 ist analog zur ersten Rotorblattform 150 mit einem zweiten Formeinsatz 162 und einer zweiten Tragstruktur 164 aufgebaut. Auf der Außenseite des Formeinsatzes 152 ist eine in Fig. 3 und Fig. 4 gezeigte Isolationsschicht angeordnet. In Fig. 4 ist insbesondere ein Teil der Heizvorrichtung gezeigt, nämlich die zwei Heizelemente 158, 159.

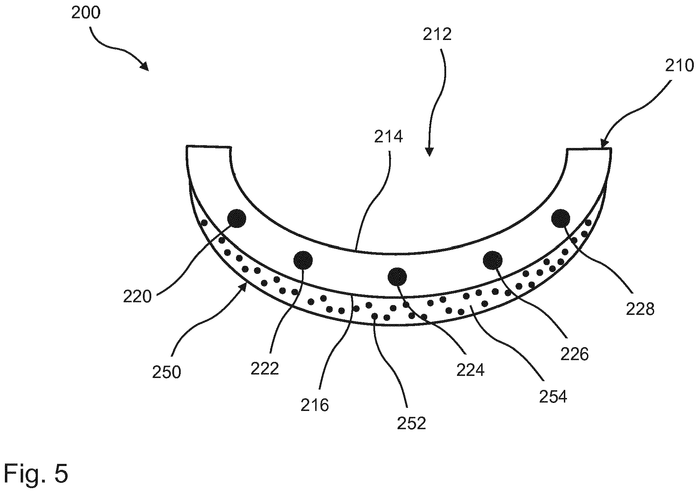

Fig. 5 zeigt eine schematische, zweidimensionale Querschnittsansicht durch eine Rotorblattform. Die Rotorblattform 200 weist einen Formeinsatz 210 auf. Der Formeinsatz 210 weist eine Kavität 212 auf. Darüber hinaus weist der Formeinsatz 210 eine Formseite 214, die zumindest teilweise die Kavität 212 ausbildet, und eine Strukturseite 216 auf. Es ist in der Fig. 5 ersichtlich, dass die Strukturseite 216 gegenüberliegend zur Formseite 214 angeordnet ist. Die Strukturseite 216 ist somit auf einer Kavität 212 abgewandten Seite des Formeinsatzes 210 verortet. Der Formeinsatz 210 weist darüber hinaus eine Heizvorrichtung mit einem ersten Heizelement 220, einem zweiten Heizelement 222, einem dritten Heizelement 224, einem vierten Heizelement 226 und einem fünften Heizelement 228 auf. Die Heizelemente 220 bis 228 sind innerhalb des Formeinsatzes 210 angeordnet. Die Heizelemente 220 bis 228 sind insbesondere derart innerhalb des Formeinsatzes 210 angeordnet, dass diese eine Wärme an die Formseite 214 abgeben können. Damit besteht die Möglichkeit, die Formseite 214 zu wärmen und somit einen Rotorblattherstellungsprozess zu ermöglichen oder zu verbessern.

An der Strukturseite 216 des Formeinsatzes 210 ist ferner eine Isolationsschicht 250 angeordnet. Die Isolationsschicht 250 erstreckt sich im Wesentlichen über die gesamte konvexe Erstreckung des Formeinsatzes 210. Die Isolationsschicht 250 umfasst Schüttelemente 252 und Klebstoff 254. Die hier gezeigte Isolationsschicht 250 mit den Schüttelementen 252 und dem Klebstoff 254 ist in einer vereinfachten, schematischen Ansicht dargestellt.

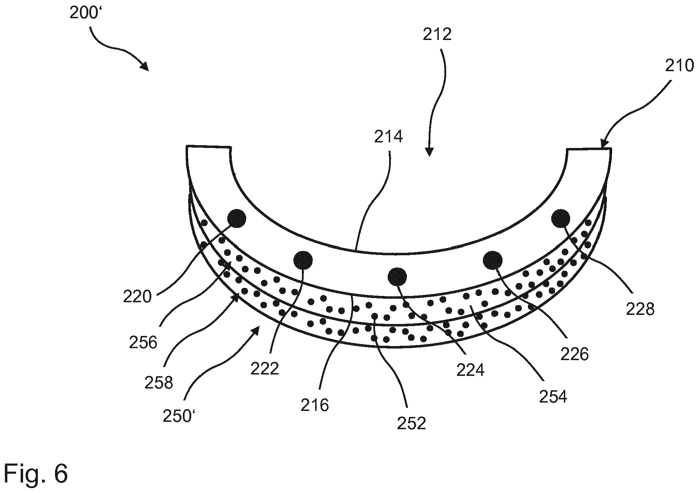

Fig. 6 zeigt eine weitere Ausführungsvariante einer Rotorblattform 200`. Die Rotorblattform 200` unterscheidet sich von der im Vorherigen beschriebenen Rotorblattform durch die Isolationsschicht 250`. Die Isolationsschicht 250` weist eine erste Isolationslage 256 und eine zweite Isolationslage 258 auf. Die erste Isolationslage 256 haftet mittels des Klebstoffs 254 an der Strukturseite 216. Die erste Isolationslage 256 kann beispielsweise durch ein Auftragen des Klebstoffs 254 auf die Strukturseite 216 und ein anschließendes Aufblasen der Schüttelemente 252 hergestellt werden. Die zweite Isolationslage 258 ist an der ersten Isolationslage 256 angeordnet. Die erste Isolationslage 256 ist zwischen der Strukturseite 216 und der zweiten Isolationslage 258 angeordnet. Mehrere übereinander angeordnete Isolationslagen 256, 258 können eine Isolationsschicht 250` ausbilden.

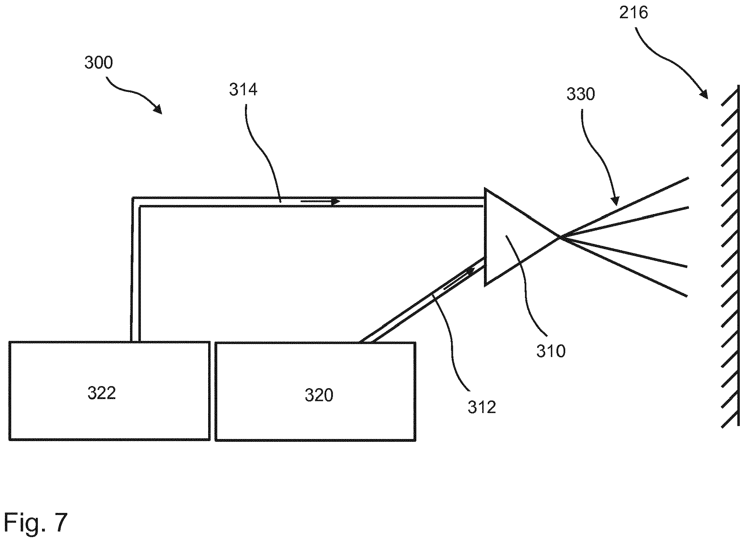

Fig. 7 zeigt eine schematische Anordnung zur Herstellung einer Isolationsschicht. Eine Isolationsschicht soll mit der gezeigten Vorrichtung an der Strukturseite 216 angeordnet werden. Das Isolationssystem 300 weist eine Dämmmaterialquelle 322 mit einer Vielzahl an Schüttelementen auf und eine Klebstoffquelle 320 mit Klebstoff. Die Klebstoffquelle 320 und die Dämmmaterialquelle 322 sind über Leitungssysteme mit der Sprühvorrichtung 310 gekoppelt. Die Kopplung erfolgt mit einer Klebstoffzugangsleitung 312 und einer Dämmmaterialzugangsleitung 314. In der Sprühvorrichtung 310 mischen sich die Vielzahl an Schüttelementen aus dem Dämmmaterial und der Klebstoff. Die Mischung aus Klebstoff und der Vielzahl an Schüttelementen aus Dämmmaterial tritt aus einer Öffnung, insbesondere einer Düse, der Sprühvorrichtung 310 aus. Diese Mischung wird auch als Dämmungsklebstoffmischung 330 bezeichnet. Durch entsprechende in der Fig. 6 nicht gezeigte Druckelemente entweicht die Dämmungsklebstoffmischung 330 aus der Sprühvorrichtung 310 und kann somit auf der Strukturseite 216 angeordnet werden.

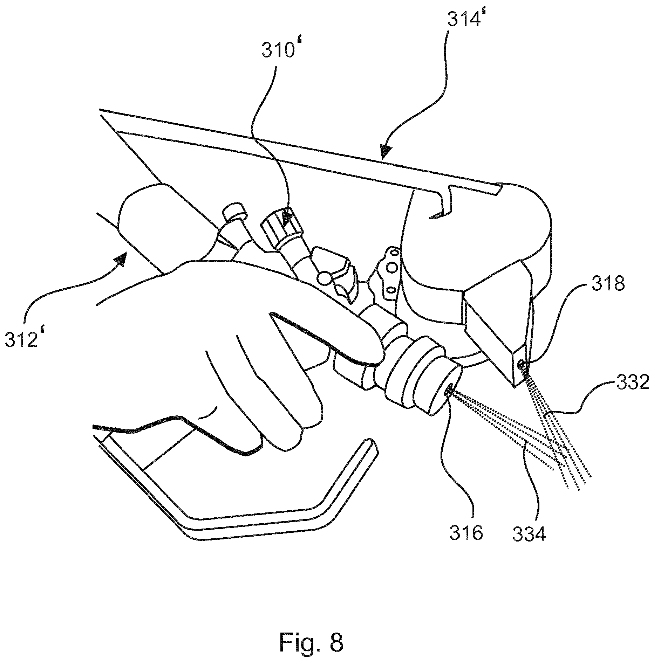

Fig. 8 zeigt eine schematische, dreidimensionale Ansicht einer Sprühvorrichtung 310`. Die Sprühvorrichtung 310' umfasst die Klebstoffzugangsleitung 312` und die Dämmmaterialzugangsleitung 314'. Die Sprühvorrichtung 310' weist keine Mischungskammer auf, sondern eine Dämmmaterialdüse 318 und eine Klebstoffdüse 316. Aus der Klebstoffdüse 316 tritt ein Klebstoffstrahl 334 aus. Aus der Dämmmaterialdüse 318 tritt ein Dämmmaterialstrahl 332 aus einer Vielzahl an Schüttelementen aus. Die Dämmmaterialdüse 318 und die Klebstoffdüse 316 sind derart ausgebildet, dass der Dämmmaterialstrahl 332 und der Klebstoffstrahl 334 sich in einem von den Düsen beabstandeten Mischbereich treffen und dort zu einer Dämmungsklebstoffmischung vermischen.

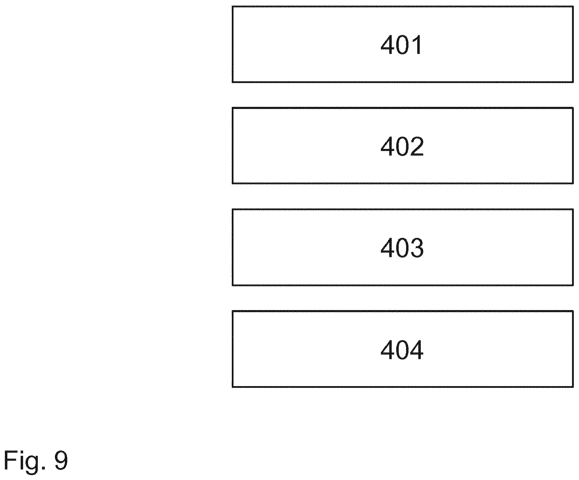

Fig. 9 zeigt ein schematisches Verfahren zur Herstellung einer Rotorblattform mit vier Schritten. In Schritt 401 wird ein Formeinsatz bereitgestellt, mit einer eine Kavität ausbildenden Formseite zum Formen eines Rotorblatts oder eines Teils eines Rotorblatts und einer der Formseite abgewandten Strukturseite. In Schritt 402 werden ein Klebstoff und eine Vielzahl an Schüttelementen aus einem Dämmmaterial bereitgestellt. In Schritt 403 wird eine Dämmungsklebstoffmischung hergestellt, und zwar durch das Mischen des Klebstoffs mit der Vielzahl an Schüttelementen. In dem Schritt 404 wird die in Schritt 403 hergestellte Dämmungsklebstoffmischung an der Strukturseite des Formeinsatzes angeordnet.

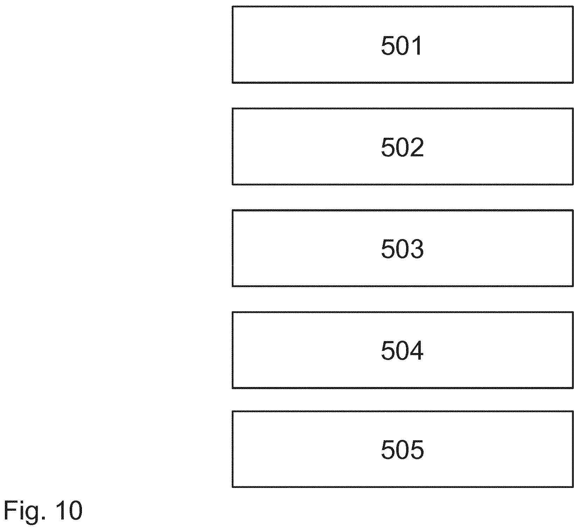

Fig. 10 zeigt ein Verfahren zur Herstellung einer Rotorblattform mit fünf Schritten. Das Verfahren umfasst den Schritt 501, nämlich das Bereitstellen eines Formeinsatzes, mit einer eine Kavität ausbildenden Formseite zum Formen eines Rotorblatts oder eines Teils eines Rotorblatts und einer der Formseite abgewandten Strukturseite. In Schritt 502 werden ein Klebstoff und eine Vielzahl an Schüttelementen aus einem Dämmmaterial bereitgestellt, wobei in Schritt 503 der Klebstoff auf der Strukturseite des Formeinsatzes aufgetragen wird.

In einem nächsten Schritt werden Schüttelemente an der Strukturseite derart angeordnet, dass die Schüttelemente mittels des Klebstoffs an der Strukturseite haften und eine erste Isolationsschicht entsteht. Das Anordnen, insbesondere Aufblasen der Schüttelemente an der mit dem Klebstoff versehenen Strukturseite, erfolgt insbesondere im Anschluss an das Auftragen des Klebstoffs an der Strukturseite. Insbesondere erfolgt dies in einem vordefinierten zeitlichen Abstand, in dem der Klebstoff noch nicht erstarrt ist.

In dem Schritt 505 wird Klebstoff auf der ersten Isolationslage angeordnet und darauffolgend werden Schüttelemente auf der ersten Isolationslage derart angeordnet, dass die Schüttelemente mittels des Klebstoffs an der ersten Isolationslage haften und eine zweite Isolationslage entsteht. Die übereinander angeordneten Isolationslagen bilden eine Isolationsschicht. Das in den Schritten 501 bis 505 beschriebene Verfahren unterscheidet sich von dem durch die Schritte 401 bis 404 definierten Verfahren dadurch, dass hier keine Dämmungsklebstoffmischung vor dem Auftragen gebildet wird, sondern die Zusammenführung des Klebstoffs mit der Vielzahl an Schüttelementen erst an der Strukturseite des Formeinsatzes erfolgt. Vorzugsweise umfasst das Verfahren einen weiteren Schritt, der die Wiederholung des Schrittes 505 vorsieht. Vorzugsweise wird der Schritt 505 derart oft wiederholt, dass die Isolationsschicht eine Gesamtstärke von 3 bis 5 cm aufweist.

Die im Vorherigen beschriebene Rotorblattform sowie die Verfahren zur Herstellung dieser Rotorblattform haben den Vorteil, dass die Isolationsschicht 250 effizient und darüber hinaus aus ressourcenschonend ausgebildet werden kann. Darüber hinaus ermöglicht das beschriebene Verfahren den Einsatz von Naturstoffen als Dämmmaterial. Infolgedessen kann die Isolationsschicht 250, 250' beispielsweise Isocyanat-frei und/oder Polyurethan-frei und/oder frei von Isocynat enthaltendem Polyurethan ausgebildet werden und somit auch die Arbeitssicherheit während der Herstellung der Rotorblattform 150, 160, 200 verbessert werden.

### BEZUGSZEICHEN

- 100: Windenergieanlage
- 102: Turm
- 104: Gondel
- 106: Rotor
- 108: Rotorblätter
- 110: Spinner
- 150: erste Rotorblattform
- 151: Hohlraum
- 152: erster Formeinsatz
- 154: erste Tragstruktur
- 156: Isolationsschicht
- 158, 159: Heizelemente
- 160: zweite Rotorblattform
- 162: zweiter Formeinsatz
- 164: zweite Tragstruktur
- 200, 200`: Rotorblattform
- 210: Formeinsatz
- 212: Kavität
- 214: Formseite
- 216: Strukturseite
- 220: erstes Heizelement
- 222: zweites Heizelement
- 224: drittes Heizelement
- 226: viertes Heizelement
- 228: fünftes Heizelement
- 250, 250`: Isolationsschicht
- 252: Schüttelement
- 254: Klebstoff
- 256: erste Isolationslage
- 258: zweite Isolationslage
- 300: Isolationssystem
- 310, 310': Sprühvorrichtung
- 312, 312': Klebstoffzugangsleitung
- 314, 314': Dämmmaterialzugangsleitung
- 316: Klebstoffdüse
- 318: Dämmmaterialdüse
- 320: Klebstoffquelle
- 322: Dämmmaterialquelle
- 330: Dämmungsklebstoffmischung
- 332: Dämmmaterialstrahl
- 334: Klebstoffstrahl

## Patentansprüche

1. Rotorblattform (150, 160, 200) zur Herstellung eines Rotorblatts (108) oder eines Teils eines Rotorblatts insbesondere einer Windenergieanlage (100), umfassend
- einen Formeinsatz (152, 162, 210), mit
∘ einer eine Kavität (212) ausbildenden Formseite (214) zum Formen eines Rotorblatts oder eines Teils eines Rotorblatts, und
∘ einer der Formseite (214) abgewandten Strukturseite (216),
- eine an der Strukturseite (216) angeordnete Isolationsschicht (250, 250'), und
- einer Vielzahl an Schüttelementen (252) aus einem Dämmmaterial,
**dadurch gekennzeichnet, dass**
- die Isolationsschicht (250, 250') einen Klebstoff (254), insbesondere einen Sprühklebstoff und/oder einen Schmelzklebstoff, aufweist, und
- der Formeinsatz (152, 162, 210) einen Kunststoff, insbesondere einen Faserverbundkunststoff, umfasst oder daraus besteht.

2. Rotorblattform (150, 160, 200) nach Anspruch 1, wobei
- das Dämmmaterial ein mineralisches Material und/oder ein organisches Material und/oder ein synthetisches Material umfasst.

3. Rotorblattform (150, 160, 200) nach einem der vorherigen Ansprüche, wobei das Dämmmaterial ausgewählt ist aus der Gruppe bestehend aus
- Cellulose;
- Holzfasern;
- Mineralwolle; und
- Polystyrol.

4. Rotorblattform (150, 160, 200) nach einem der vorherigen Ansprüche, wobei
- der Klebstoff (254) eine Isocyanat-freie Klebstoffbasis aufweist und/oder eine Polyurethan-freie Klebstoffbasis aufweist und/oder eine Klebstoffbasis aufweist, die frei von Isocyanat enthaltendem Polyurethan ist.

5. Rotorblattform (150, 160, 200) nach einem der vorherigen Ansprüche, wobei die Klebstoffbasis des Klebstoffs (254) ausgewählt ist aus der Gruppe bestehend aus:
- Polyamid;
- Polyolefin;
- Kautschuk;
- Isocyanat-freies Polyurethan,
- Isocyanat-freie Klebstoffbasis;
- Polyurethan-freie Klebstoffbasis.

6. Rotorblattform (150, 160, 200) nach einem der vorherigen Ansprüche, umfassend
- eine Heizvorrichtung (158, 159, 220-228),
- wobei vorzugsweise die Heizvorrichtung (158, 159, 220-228) die Formseite (214) temperiert.

7. Rotorblattform (150, 160, 200) nach einem der vorherigen Ansprüche, wobei die Heizvorrichtung (158, 159, 220-228)
- eine elektrische Beheizung bereitstellt, und/oder
- eine wasserbasierte Beheizung bereitstellt.

8. Rotorblattform (150, 160, 200) nach einem der vorherigen Ansprüche, umfassend
- eine Tragstruktur (154, 164), wobei die Tragstruktur (154, 164) zumindest teilweise an der Strukturseite (216) des Formeinsatzes (152, 162, 210) angeordnet ist, und
- vorzugsweise die Tragstruktur (154, 164) als Gitterstruktur ausgebildet ist.

9. Verfahren zur Herstellung einer Rotorblattform (150, 160, 200), umfassend
- Bereitstellen eines Formeinsatzes (152, 162, 210), mit
∘ einer eine Kavität (212) ausbildenden Formseite (214) zum Formen eines Rotorblatts (108) oder eines Teils eines Rotorblatts,
∘ einer der Formseite (214) abgewandten Strukturseite (216),
- Bereitstellen von Klebstoff (254), insbesondere von Sprühklebstoff und/oder von Schmelzklebstoff, und einer Vielzahl an Schüttelementen (252) aus einem Dämmmaterial,
- Herstellen einer Dämmungsklebstoffmischung durch Mischen des Klebstoffs, insbesondere des Sprühklebstoffs und/oder des Schmelzklebstoffs, (254) mit der Vielzahl an Schüttelementen (252),
- Anordnen der Dämmungsklebstoffmischung an der Strukturseite (216) **dadurch gekennzeichnet, dass** der Formeinsatz (152, 162, 210) einen Kunststoff, insbesondere einen Faserverbundkunststoff, umfasst oder daraus besteht.

10. Verfahren zur Herstellung einer Rotorblattform (150, 160, 200), umfassend
- Bereitstellen eines Formeinsatzes (152, 162, 210), mit
∘ einer eine Kavität (212) ausbildenden Formseite (214) zum Formen eines Rotorblatts (108) oder eines Teils eines Rotorblatts,
∘ einer der Formseite (214) abgewandten Strukturseite (216),
- Bereitstellen von Klebstoff (254), insbesondere von Sprühklebstoff und/oder von Schmelzklebstoff, und einer Vielzahl an Schüttelementen (252) aus einem Dämmmaterial,
- Auftragen von Klebstoff (254), insbesondere von Sprühklebstoff und/oder von Schmelzklebstoff, auf der Strukturseite (216),
- Anordnen, insbesondere Aufblasen, von Schüttelementen (252) an der Strukturseite (216) derart, dass die Schüttelemente (252) mittels des Klebstoffs (254) an der Strukturseite (216) haften und eine erste Isolationslage (256) entsteht, und
- vorzugsweise Auftragen von Klebstoff (254) auf der ersten Isolationslage (256) und Anordnen von Schüttelementen (252) auf der ersten Isolationslage (256) derart, dass die Schüttelemente (252) mittels des Klebstoffs (254) an der ersten Isolationslage (256) haften und eine zweite Isolationslage (258) entsteht
**dadurch gekennzeichnet, dass** der Formeinsatz (152, 162, 210) einen Kunststoff, insbesondere einen Faserverbundkunststoff, umfasst oder daraus besteht.

11. Verfahren zur Herstellung eines Rotorblatts oder eines Teils eines Rotorblatts, umfassend
- Herstellen einer Rotorblattform (150, 160, 200) nach Anspruch 9 und/oder Anspruch 10, oder Bereitstellen einer Rotorblattform (150, 160, 200) nach mindestens einem der Ansprüche 1-8,
- Bereitstellen eines Rotorblattmaterials, insbesondere von Fasern und eines Matrixmaterials,
- Formen des Rotorblattmaterials mit der Rotorblattform (150, 160, 200) zu einem Rotorblatt oder eines Teils eines Rotorblatts.

12. Verfahren nach dem vorherigen Anspruch, umfassend
- Anordnen des Rotorblatts und/oder des Teils des Rotorblatts an einem oder mehreren Rotorblattkomponenten zur Herstellung eines Fertigrotorblatts.

13. Verwendung einer Rotorblattform (150, 160, 200) nach einem der Ansprüche 1-8 zur Herstellung eines Rotorblatts oder eines Teils eines Rotorblatts insbesondere einer Windenergieanlage.

## Claims

1. A rotor blade mold (150, 160, 200) for production of a rotor blade (108) or part of a rotor blade, especially for a wind turbine (100), comprising
- a mold insert (152, 162, 210), having
∘ a mold side (214) that forms a cavity (212) and is for shaping of a rotor blade or part of a rotor blade, and
∘ a structure side (216) facing away from the mold side (214),
- an insulation layer (250, 250') disposed on the structure side (216), and
- a multitude of fill elements (252) made of an insulation material,
**characterized in that**
- the insulation layer (250, 250') has an adhesive (254), especially a spray adhesive and/or a hotmelt adhesive, and
- the mold insert (152, 162, 210) comprises or consists of a plastic, especially a fiber composite plastic.

2. The rotor blade mold (150, 160, 200) as claimed in claim 1, wherein
- the insulation material comprises a mineral material and/or an organic material and/or a synthetic material.

3. The rotor blade mold (150, 160, 200) as claimed in either of the preceding claims, wherein the insulation material is selected from the group consisting of
- cellulose;
- wood fibers;
- mineral wool; and
- polystyrene.

4. The rotor blade mold (150, 160, 200) as claimed in any of the preceding claims, wherein
- the adhesive (254) has an isocyanate-free adhesive base and/or has a polyurethane-free adhesive base and/or has an adhesive base free of isocyanate-containing polyurethane.

5. The rotor blade mold (150, 160, 200) as claimed in any of the preceding claims, wherein the adhesive base of the adhesive (254) is selected from the group consisting of:
- polyamide;
- polyolefin;
- rubber;
- isocyanate-free polyurethane,
- isocyanate-free adhesive base;
- polyurethane-free adhesive base.

6. The rotor blade mold (150, 160, 200) as claimed in any of the preceding claims, comprising
- a heating device (158, 159, 220-228),
- wherein the heating device (158, 159, 220-228) preferably heats the mold side (214).

7. The rotor blade mold (150, 160, 200) as claimed in any of the preceding claims, wherein the heating device (158, 159, 220-228)
- provides electrical heating, and/or
- provides water-based heating.

8. The rotor blade mold (150, 160, 200) as claimed in any of the preceding claims, comprising
- a support structure (154, 164), wherein the support structure (154, 164) is disposed at least partly on the structure side (216) of the mold insert (152, 162, 210), and
- the support structure (154, 164) preferably takes the form of a lattice structure.

9. A process for producing a rotor blade mold (150, 160, 200), comprising
- providing a mold insert (152, 162, 210), having
∘ a mold side (214) that forms a cavity (212) and is for shaping of a rotor blade (108) or part of a rotor blade, and
∘ a structure side (216) facing away from the mold side (214),
- providing adhesive (254), especially spray adhesive and/or hotmelt adhesive, and a multitude of fill elements (252) made of an insulation material,
- producing an insulation adhesive mixture by mixing the adhesive, especially the spray adhesive and/or the hotmelt adhesive, (254) with the multitude of fill elements (252),
- arranging the insulation adhesive mixture on the structure side (216) **characterized in that** the mold insert (152, 162, 210) comprises or consists of a plastic, especially a fiber composite plastic.

10. A process for producing a rotor blade mold (150, 160, 200), comprising
- providing a mold insert (152, 162, 210), having
∘ a mold side (214) that forms a cavity (212) and is for shaping of a rotor blade (108) or part of a rotor blade, and
∘ a structure side (216) facing away from the mold side (214),
- providing adhesive (254), especially spray adhesive and/or hotmelt adhesive, and a multitude of fill elements (252) made of an insulation material,
- applying adhesive (254), especially spray adhesive and/or hotmelt adhesive, on the structure side (216),
- arranging, especially by blowing, fill elements (252) on the structure side (216) in such a way that the fill elements (252) adhere to the structure side (216) by means of the adhesive (254) and a first insulation stratum (256) is formed, and
- preferably applying adhesive (254) to the first insulation stratum (256) and arranging fill elements (252) atop the first insulation stratum (256) in such a way that the fill elements (252) adhere to the first insulation stratum (256) by means of the adhesive (254) and a second insulation stratum (258) is formed **characterized in that** the mold insert (152, 162, 210) comprises or consists of a plastic, especially a fiber composite plastic.

11. A process for producing a rotor blade or part of a rotor blade, comprising
- producing a rotor blade mold (150, 160, 200) as claimed in claim 9 and/or claim 10, or providing a rotor blade mold (150, 160, 200) as claimed in at least one of claims 1-8,
- providing a rotor blade material, especially fibers and a matrix material,
- shaping the rotor blade material with the rotor blade mold (150, 160, 200) to give a rotor blade or part of a rotor blade.

12. The process as claimed in the preceding claim, comprising
- arranging the rotor blade and/or part of the rotor blade with respect to one or more rotor blade components for production of a finished rotor blade.

13. The use of a rotor blade mold (150, 160, 200) as claimed in any of claims 1-8 for production of a rotor blade or part of a rotor blade, especially for a wind turbine.

## Revendications

1. Moule de pale de rotor (150, 160, 200) destiné à fabriquer une pale de rotor (108) ou une partie d'une pale de rotor en particulier d'une éolienne (100), comprenant
- un insert de moulage (152, 162, 210) avec
- - un côté de moulage (214) formant une cavité (212), destiné à mouler une pale de rotor ou une partie d'une pale de rotor, et
- - un côté de structure (216) opposé au côté de moulage (214),
- une couche d'isolation (250, 250') disposée sur le côté de structure (216), et
- une pluralité d'éléments en vrac (252) composés d'un matériau isolant,
**caractérisée en ce que**
- la couche d'isolation (250, 250') présente une colle (254), en particulier une colle à pulvériser et/ou une colle à fusion, et
- l'insert de moulage (152, 162, 210) comprend une matière plastique, en particulier une matière plastique composite à base de fibres ou en est constitué.

2. Moule de pale de rotor (150, 160, 200) selon la revendication 1, dans lequel
- le matériau isolant comprend un matériau minéral et/ou un matériau organique et/ou un matériau synthétique.

3. Moule de pale de rotor (150, 160, 200) selon l'une quelconque des revendications précédentes, dans lequel le matériau isolant est choisi parmi le groupe constitué de
- cellulose ;
- de fibres de bois ;
- de laine minérale ; et
- de polystyrène.

4. Moule de pale de rotor (150, 160, 200) selon l'une quelconque des revendications précédentes, dans lequel
- la colle (254) présente une base de colle sans isocyanate et/ou présente une base de colle sans polyuréthane et/ou présente une base de colle qui est sans polyuréthane contenant de l'isocyanate.

5. Moule de pale de rotor (150, 160, 200) selon l'une quelconque des revendications précédentes, dans lequel la base de colle de la colle (254) est choisie parmi le groupe constitué de :
- polyamide ;
- polyoléfine ;
- caoutchouc ;
- polyuréthane sans isocyanate,
- base de colle sans isocyanate ;
- base de colle sans polyuréthane.

6. Moule de pale de rotor (150, 160, 200) selon l'une quelconque des revendications précédentes, comprenant
- un dispositif de chauffage (158, 159, 220 - 228),
- dans lequel de préférence le dispositif de chauffage (158, 159, 220-228) thermorégule le côté de moulage (214).

7. Moule de pale de rotor (150, 160, 200) selon l'une quelconque des revendications précédentes, dans lequel le dispositif de chauffage (158, 159, 220-228)
- fournit un chauffage électrique et/ou
- fournit un chauffage à base d'eau.

8. Moule de pale de rotor (150, 160, 200) selon l'une quelconque des revendications précédentes, comprenant
- une structure porteuse (154, 164), dans lequel la structure porteuse (154, 164) est disposée au moins en partie sur le côté structuré (216) de l'insert de moulage (152, 162, 210), et
- de préférence la structure porteuse (154, 164) est réalisée en tant que structure grillagée.

9. Procédé pour fabriquer un moule de pale de rotor (150, 160, 200), comprenant
- la fourniture d'un insert de moulage (152, 162, 210) avec
- - un côté de moulage (214) formant une cavité (212), destiné à mouler une pale de rotor (108) ou une partie d'une pale de rotor,
- - un côté de structure (216) opposé au côté de moulage (214),
- la fourniture de colle (254), en particulier de colle à pulvériser et/ou de colle à fusion, et d'une pluralité d'éléments en vrac (252) composés d'un matériau isolant,
- la fabrication d'un mélange à colle isolante en mélangeant la colle, en particulier la colle à pulvériser et/ou la colle à fusion, (254) à la pluralité d'éléments en vrac (252),
- la disposition du mélange à colle isolante sur le côté structuré (216),
**caractérisé en ce que** l'insert de moulage (152, 162, 210) comprend une matière plastique, en particulier une matière plastique composite à base de fibres, ou en est constitué.

10. Procédé pour fabriquer un moule de pale de rotor (150, 160, 200), comprenant
- la fourniture d'un insert de moulage (152, 162, 210) avec
- - un côté de moulage (214) formant une cavité (212), destiné à mouler une pale de rotor (108) ou une partie d'une pale de rotor,
- - un côté de structure (216) opposé au côté de moulage (214),
- la fourniture de colle (254), en particulier de colle à pulvériser et/ou de colle à fusion, et d'une pluralité d'éléments en vrac (252) composés d'un matériau isolant,
- l'application de colle (254), en particulier de colle à pulvériser et/ou de colle à fusion, sur le côté structuré (216),
- la disposition, en particulier l'application par soufflage, d'éléments en vrac (252) sur le côté structuré (216) de telle manière que les éléments en vrac (252) adhèrent au côté structuré (216) au moyen de la colle (254) et une première strate d'isolation (256) se forme, et
- de préférence l'application de colle (254) sur la première strate d'isolation (256) et la disposition d'éléments en vrac (252) sur la première strate d'isolation (256)
de telle manière que les éléments en vrac (252) adhèrent à la première strate d'isolation (256) au moyen de la colle (254) et une deuxième strate d'isolation (258) se forme,
**caractérisé en ce que** l'insert de moulage (152, 162, 210) comprend une matière plastique, en particulier une matière plastique composite à base de fibres, ou en est constitué.

11. Procédé pour fabriquer une pale de rotor ou une partie d'une pale de rotor, comprenant
- la fabrication d'un moule de pale de rotor (150, 160, 200) selon la revendication 9 et/ou la revendication 10, ou la fourniture d'un moule de pale de rotor (150, 160, 200) selon au moins l'une quelconque des revendications 1-8,
- la fourniture d'un matériau de pale de rotor, en particulier de fibres et d'un matériau de matrice,
- le moulage du matériau de pale de rotor avec le moule de pale de rotor (150, 160, 200) en une pale de rotor ou en une partie d'une pale de rotor.

12. Procédé selon la revendication précédente, comprenant
- la disposition de la pale de rotor et/ou de la partie de la pale de rotor sur un ou plusieurs composants de pale de rotor pour fabriquer une pale de rotor finie.

13. Utilisation d'un moule de pale de rotor (150, 160, 200) selon l'une quelconque des revendications 1 - 8 pour fabriquer une pale de rotor ou une partie d'une pale de rotor en particulier d'une éolienne.
